(19) Europäisches Patentamt
European Patent Office
Office européen des brevets

(11) Veröffentlichungsnummer: **0 015 366**
**B2**

(12) **NEUE EUROPÄISCHE PATENTSCHRIFT**

(45) Veröffentlichungstag der neuen Patentschrift: **05.12.90**

(51) Int. Cl.[5]: **C 07 F 7/08**

(21) Anmeldenummer: **80100218.9**

(22) Anmeldetag: **17.01.80**

# (54) Verfahren zur Herstellung wässriger Lösungen von Alkaliorganosiliconaten.

(30) Priorität: **05.03.79 GB 7907664**

(43) Veröffentlichungstag der Anmeldung:
**17.09.80 Patentblatt 80/19**

(45) Bekanntmachung des Hinweises auf die Patenterteilung:
**12.05.82 Patenblatt 82/19**

(45) Bekanntmachung des Hinweises auf die Entscheidung u¨ber den Einspruch:
**05.12.90 Patentblatt 90/49**

(84) Benannte Vertragsstaaten:
**BE DE FR GB IT**

(56) Entgegenhaltungen:
**DE-C- 874 906**
**GB-A- 729 606**
**US-A-2 438 055**
**US-A-2 567 110**
**US-A-2 574 265**

**Die Akte enthält technische Angaben, die nach dem Eingang der Anmeldung eingereicht wurden und die nicht in dieser Patentschrift enthalten sind.**

(73) Patentinhaber: **Th. Goldschmidt AG**
**Goldschmidtstrasse 100 Postfach 101461**
**D-4300 Essen 1 (DE)**

(72) Erfinder: **Koerner, Götz, Dr.**
**Kantorie 126**
**D-4300 Essen (DE)**
Erfinder: **Kropac, Vaclav**
**Sundernholz 62**
**4300 Essen-Stadtwaldt (DE)**
Erfinder: **Rau, Harald**
**Schmettaustrasse 11**
**D-4300 Essen (DE)**

(56) Entgegenhaltungen:
**Chemie und Technologie der Silicone,W. Noll, "2.Auflage, Seiten 74,75,168,167, 1968**
**Chemische Technologie, Wirnacker-Küchler, 4. Auflage, Band 6, Seiten 816,851,852, 1982**
**W. Noll "Chemie u. Technologie der Silicone" 2 Auflage 1968. Verlag Chemie, Weinheim/Bergstr. S 204**

**EP 0 015 366 B2**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung wäßriger Lösungen von Alkaliorganosiliconaten, deren Organorest ein Methylrest und deren Alkalirest ein Natrium- oder Kaliumion ist.

Alkalimethylsiliconatlösungen werden üblicherweise dadurch hergestellt, daß man Methyltrichlorsilan hydrolysiert und die entstandene Methylkieselsäure in Alkalilauge löst. Hierbei ist es erforderlich, die Methylkieselsäure abzufiltrieren und sorgfältig auszuwaschen, um die dem Niederschlag anhaftende oder von diesem eingeschlossene Salzsäure möglichst weitgehend zu entfernen. Die Filtration der Methylkieselsäure und deren Auswaschen bereitet jedoch erhebliche Schwierigkeiten, da der Niederschlag sehr voluminös ist, sich deshalb schlecht filtrieren läßt und im Inneren erhebliche Mengen HCl einschließt, die sich dem Auswaschvorgang zumindest teilweise entziehen. Bei der anschließenden Umsetzung mit Alkalilauge bilden sich deshalb neben den gewünschten Alkalimethylsiliconaten der eingeschlossenen HCl entsprechende Mengen von Alkalichloriden. Da außerdem die ausgefällte Monomethylkieselsäure erhebliche Mengen Wasser einschließt, ist es, falls höhere Konzentrationen gefordert werden, notwendig, die Alkalisiliconatlösungen durch Destillation zu konzentrieren.

Ein weiterer, besonders schwerwiegender Nachteil dieser Verfahrensweise besteht darin, daß die Methylkieselsäure nicht lagerstabil ist und beim Stehen zu höhermolekularen Produkten kondensiert, welche sich nicht mehr oder nur noch teilweise in wäßrigen Lösungen von Alkalihydroxid lösen.

In der DE-PS 1 176 137 ist ein Verfahren zur Herstellung von Alkalimethylsiliconaten bzw. deren wäßrigen Lösungen beschrieben, bei welchem die Siliconate mit wesentlich geringeren Mengen an verunreinigendem Alkalichlorid anfallen. Das Verfahren ist dadurch gekennzeichnet, daß man die Methylkieselsäure aus den alkalichloridhaltigen Alkalimethylsiliconatlösungen durch Zugabe von Säure oder säureabspaltenden Verbindungen bis zur Erreichung eines pH-Wertes von etwa 4 unterhalb 60°C ausfällt und die abgetrennte Methylkieseilsäure in äquimolaren Mengen Alkalilauge löst und gegebenenfalls die erhaltene Lösung vom Wasser befreit.

Auch bei dem Verfahren der DE-PS 1 176 137 besteht jedoch die Schwierigkeit, daß die ausgefällte Methylkieselsäure nicht lagerstabil ist und deshalb sofort verarbeitet werden muß. Außerdem enthält auch nach diesem Verfahren gemäß Spalte 4, Zeilen 6 ff. die ausgefällte Methylkieselsäure erhebliche Mengen Wasser, so daß selbst bei der Herstellung einer nur 30%igen Lösung aus der entstandenen Lösung des Natriummethylsiliconates Wasser durch Destillation entfernt werden muß.

Der Erfindung liegt die Aufgabe zugrunde, ein Verfahren zu finden, bei welchem alkalichloridfreie Alkaliorganosiliconatlösungen erhalten werden, bei dem nach Möglochkeit eine Filtrationsstufe vermieden werden kann und welches es gestattet, Lösungen beliebiger Konzentration herzustellen.

Erfindungsgemäß gelingt die Lösung der Aufgabe dadurch, daß man Organoalkoxypolysiloxane der allgemeinen Formel

$$(CH_3)_x-\overset{\displaystyle (OC_2H_5)_a}{\overset{|}{Si}}-O_{\frac{4-(a+x)}{2}}$$

worin
a ein Zahl $\leqq 2$ und
x 1 bis 1,24 ist

mit waßrigen Lösungen von NaOH oder KOH einer Konzentration von 0,7 bis 0,9 [Mol·100 $g^{-1}$] bei Temperaturen $\geqq$ 80°C umsetzt, gegebenenfalls den freiwerdenden Alkohol $C_2H_5OH$ abdestilliert und/oder die Lösung des Reaktionsproduktes mit Wasser auf die gewünschte Konzentration einstellt; a hat vorzugsweise einen Wert von 0,1 bis 0,8, x hat vorzugsweise einen Wert von 1,0.

Es war dabei für den Fachmann überraschend, daß sich Organoalkoxypolysiloxane der Formel I, welche ein relativ hohes Molekulargewicht aufweisen, bei denen also a $\leqq$ 1 ist, noch in Alkalilauge zu monomeren oder gering kondensierten Alkaliorganosiliconaten lösen lassen, da man hierbei die Aufspaltung von SiOSi-Verbindungen voraussetzen muß (W. Noll, Chemie und Technologie der Silicone, Verlag Chemie GmbH, Weinheim, 1968, S. 524).

Es hat sich weiterhin gezeigt, daß das erfindungsgemäße Verfahren nur mit Alkalilaugen innerhalb eines bestimmten Konzentrationsbereiches durchführbar ist. Unterschreitet man dem im Patentanspruch 1 angegebenen Wert von 0,7 [Mol·100 $g^{-1}$], lösen sich die Methylethoxypolysiloxane nicht auf, und es unterbleibt die Bildung der gewünschten Siliconate. Überschreitet man eine Konzentration von 0,9 [Mol·100 $g^{-1}$], wird die Kondensationsreaktion begünstigt und man erhält ebenfalls keine klaren Lösungen von Alkaliorganosiliconaten, sondern je nach Laugekonzentration mehr oder weniger vergelte Produkte.

Das erfindungsgemäße Verfahren gestattet es, Lösungen herzustellen, die 40 Gew.-% und mehr an Alkalisiliconat enthalten. Die Lösungen können durch Verdünnen mit Wasser auf die gewünschte Konzentration eingestellt werden.

Der bei der Umsetzung freiwerdende Alkohol $C_2H_5OH$ kann aus dem Reaktionsgemisch abdestilliert werden oder in diesem verbleiben. Häufig wird man den Alkohol in der wäßrigen Alkaliorganosiliconatlösung belassen, da bei vielen Anwendungszwecken, z. B. bei der Imprägnierung und Durchtränkung von mineralischen Rohstoffen mit diesen Lösungen zum Zweck der Hydrophobierung ein Gehalt an Alkohol die Penetration der Lösungen verbessert.

Das als Ausgangsprodukt verwendete Organoalkoxypolysiloxan der Formel I läßt sich in

bekannter Weise durch Umsetzung von entsprechenden Chlorsilanen mit Wasser/Ethanol-Gemischen herstellen. Dieses Ausgangsprodukt hat den Vorteil hoher Lagerbeständigkeit. Bei dem erfindungsgemäßen Verfahren geht man somit von einem lagerstabilen Ausgangsprodukt aus, und es entstehen im Verlaufe des Verfahrens keine instabilen Zwischenprodukte, so daß bei Einhaltung der erfindungsgemäßen Verfahrensbedingungen auf einfache und reproduzierbare Weise alkalichloridfreie Alkaliorganosiliconatlösungen hoher Konzentration erhalten werden können.

Das erfindungsgemäße Verfahren soll in den folgenden Beispielen näher erläutert werden. Alle Prozentangaben in den Beispielen sind Gewichtsprozente.

Beispiel 1

In einem mit Rührer und Rückflußkühler versehenen 1000 ml-Kolben werden 482,5 g einer 32,6%igen NaOH-Lösung vorgelegt, auf 110°C erhitzt und aus einem Tropftrichter 263 g des Polymethyläthoxysiloxans der Formel

$$CH_3{-}\underset{\displaystyle (OC_2H_5)_{0.61}}{\underset{|}{Si}}{-}O_{1.19} \qquad \text{(Molgew. 1110)}$$

unter Rühren so schnell zugetropft, daß der Rückfluß konstant bleibt. Die Temperatur sinkt dabei auf 85°C. Nach Abkühlen auf Raumtemperatur wird die Methylsiliconatlösung durch Zugabe von 154,7 g Wasser auf einen Feststoffgehalt von 40% eingestellt. Ausbeute: 360,1 g Siliconat (fest). Bei der Analyse der Methylsiliconatlösung wurden 23,2% $CH_3SiO_{1.5}$, 14,0% $Na_2O$ und weniger als 0,001% Cl gefunden.

Beispiel 2

Das im Beispiel 1 beschriebene Verfahren wird mit der Abänderung wiederholt, daß anstatt der NaOH-Lösung 466 g einer 47,2%igen KOH-Lösung verwendet wird. Nach der Umsetzung werden 729 g einer 52%igen Kaliummethylsiliconatlösung gewonnen.

Beispiel 3

Das im Beispiel 1 beschriebene Verfahren wird mit der Abänderung wiederholt, daß zu 462 g einer 32%igen NaOH-Lösung bei 80 bis 110°C 270 g des Polymethyläthoxysiloxans der Formel

$$(CH_3)_{1.14}{-}\underset{\displaystyle (OC_2H_5)_{0.70}}{\underset{|}{Si}}{-}O_{1.08}$$

(Molgew. 1315)

zugetropft werden. Es werden 732 g einer 42%igen Natriummethylsiliconatlösung gewonnen, die weniger als 0,001% Cl enthält.

Beispiel 4

Das im Beispiel 1 beschriebene Verfahren wird mit der Abänderung wiederholt, daß zu 444 g einer 32%igen NaOH-Lösung bei 80 bis 110°C 250 g des Polymethyläthoxysiloxans der Formel

$$(CH_3)_{1.25}{-}\underset{\displaystyle (OC_2H_5)_{0.487}}{\underset{|}{Si}}{-}O_{1.132}$$

(Molgew. 1246)

zugetropft werden. Es werden 694 g einer 44,5%igen Lösung des chlorfreien Natriumpolymethylsiliconats gewonnen.

**Patentansprüche**

1. Verfahren zur Herstellung waßrigen Lösungen von Alkaliorganosiliconaten, deren Organorest ein Methylrest, und deren Alkalirest ein Natrium- oder Kaliumion ist, dadurch gekennzeichnet, daß man Organoalkoxypolysiloxane der allgemeinen Formel

$$(CH_3)_x{-}\overset{\displaystyle (OC_2H_5)_a}{\overset{|}{Si}}{-}O_{\frac{4-(a+x)}{2}} \qquad \text{I}$$

worin
a ein Zahl $\leqq 2$ und
x 1 bis 1,25 ist

mit waßrigen Lösungen von NaOH oder KOH einer Konzentration von 0,7 bis 0,9 $[Mol \cdot 100\ g^{-1}]$ bei Temperaturen $\geqq$ 80°C umsetzt, gegebenenfalls den freiwerdenden Alkohol $C_2H_5OH$ abdestilliert und/oder die Lösung des Reaktionsproduktes mit Wasser auf die gewünschte Konzentration einstellt.

2. Verfahren nach Anspruch 1, dadurch gekennzeichnet, daß man ein Methylethoxypolysiloxan verwendet, bei dem a einen Wert von 0,1 bis 0,8 hat.

3. Verfahren nach Anspruch 1 oder 2, dadurch gekennzeichnet, daß man ein Methylethoxypolysiloxan verwendet, bei dem x einen Wert von 1 hat.

**Revendications**

1. Procédé de préparation de solutions aqueuses d'organosiliconates alcalins dont le radical organique est un radical méthyle et l'ion alcalin un ion sodium ou potassium, caractérisé en ce que l'on fait réagir des organoalcoxypolysiloxannes de formule générale

$$(CH_3)_x{-}\overset{\displaystyle (OC_2H_5)_a}{\overset{|}{Si}}{-}O_{\frac{4-(a+x)}{2}} \qquad \text{I}$$

dans laquelle
a est un nombre $\leqq 2$ et
x est un nombre allant de 1 à 1,5,

avec des solutions aqueuses de NaOH ou de KOH

à une concentration de 0,7 à 0,9 [moles·100 $g^{-1}$] à des températures supérieures ou égales à 80°C, on distille le cas échéant l'alcool $C_2H_5OH$ libéré et/ou on règle la solution du produit de réaction à la concentration voulue à l'aide d'eau.

2. Procédé selon la revendication 1, caractérisé en ce que l'on utilise un méthyleethoxypolysiloxanne dans lequel a une valeur de 0,1 à 0,8.

3. Procédé selon la revendication 1 ou 2, caractérisé en ce que l'on utilise un méthyleethoxypolysiloxanne dans lequel x a une valeur de 1.

## Claims

1. Process for the preparation of aqueous solutions of alkali metal organo-siliconates, the organo radical of which is a methyl radical and the alkali metal radical of which is a sodium ion or potassium ion, characterised in that organo-alkoxypolysiloxanes of the general formula:

$$(CH_3)_x-\overset{\overset{(OC_2H_5)_a}{|}}{Si}-O_{\frac{4-(a+x)}{2}} \qquad \text{I}$$

wherein a is a number $\leqq 2$ and x is 1 to 1.25, are reacted with aqueous solutions of NaOH or KOH of a concentration of 0.7 to 0.9 (Mol·100 $g^{-1}$) at temperatures $\geqq 80°C$ and, if desired, the eliminated alcohol $C_2H_5OH$ is distilled off and/or the solution of the reaction product is adjusted to the desired concentration with water.

2. Process according to claim 1, characterised in that a methylethoxypolysiloxane is used, in which a has a value from 0.1 to 0.8.

3. Process according to claim 1 or 2, characterised in that a methylethoxypolysiloxane is used, in which x has a value of 1.